# EUROPEAN PATENT APPLICATION

(11) **EP 4 087 013 A1**
(43) Date of publication of application: **09.11.2022**
(21) Application number: 21753944.4
(22) Date of filing: 02.02.2021
(51) Int. Cl.: H01M 10/48

(54) **BATTERY, BATTERY MODULE, BATTERY PACK AND ELECTRIC VEHICLE**

(30) Priority: 12.02.2020 CN 202010089319
(71) Applicant: BYD Company Limited, Shenzhen, Guangdong 518118 (CN)
(72) Inventor: HE, Ping, Shenzhen, Guangdong 518118 (CN); GUO, Yongming, Shenzhen, Guangdong 518118 (CN); ZHANG, Zhonglin, Shenzhen, Guangdong 518118 (CN); ZHOU, Yanfei, Shenzhen, Guangdong 518118 (CN); LIU, Yanchu, Shenzhen, Guangdong 518118 (CN)
(74) Representative: Hoffmann Eitle
(86) International application number: PCT/CN2021/074818
(87) International publication number: WO 2021/159995

(57) **Abstract**

Disclosed is a cell (10), including a housing (100), an electrode core pack (500), and a sampling assembly (300). The housing (100) includes a cover plate (110) arranged at an end of the cell (10). The electrode core pack (500) is arranged in the housing (100). The sampling assembly (300) includes a ceramic sealing member (310), a connection sheet (320), and a sampling member (330). The ceramic sealing member (310) is fixed on the cover plate (110) by the connection sheet (320). The sampling member (330) is fixed on the ceramic sealing member (310). A first end of the sampling member (330) is connected to the electrode core pack (500). A second end of the sampling member (330) is provided to be electrically connected to a battery controller (200).

## Description

### CROSS-REFERENCE TO RELATED APPLICATIONS

The present disclosure claims priority to Chinese Patent Application No. 202010089319.1, entitled "CELL, BATTERY MODULE, BATTERY PACK, AND ELECTRIC VEHICLE" and filed by BYD Company Limited on February 12, 2020.

### FIELD

The present disclosure relates to the field of battery technologies, and more specifically, to a cell, a battery module, a battery pack, and an electric vehicle.

### BACKGROUND

With constant popularization of new energy vehicles, the requirements for the use of power batteries in new energy vehicles are increasing. The internal temperature of a power battery pack in operation will increase, so it is necessary to monitor the internal temperature of the battery in real time to avoid explosion as a result of excessively high temperature. Therefore, when a power battery formed by multiple electrode core packs is used, it is generally necessary to obtain real-time information of the electrode core pack about current, voltage, temperature, and the like, so as to better manage the power battery. However, the electrode core packs are arranged inside the power battery and sealed in by a housing of the power battery, so that the signals of voltage, current, temperature, and the like cannot be collected in real time from the electrode core packs inside the power battery. In related arts, a sampling needle is often directly fixed on a cover plate, which reduces the airtightness of the housing. Therefore, how to collect signals from multiple electrode core packs inside a battery while ensuring airtightness is a problem that needs to be resolved in the manufacture of power batteries.

### SUMMARY

The present disclosure is intended to resolve one of the technical problems in related arts at least to some extent.

Therefore, according to a first aspect of the present disclosure, a cell is provided. The cell includes:
a housing, including a cover plate arranged at an end portion of the cell;
an electrode core pack, arranged in the housing and including at least one electrode core; and
a sampling assembly, including a ceramic sealing member, a connection sheet, and a sampling member, where the ceramic sealing member is fixed on the cover plate by the connection sheet, the sampling member is fixed on the ceramic sealing member, a first end of the sampling member is connected to the electrode core pack, and a second end of the sampling member is provided to be electrically connected to a battery controller.

In an implementation of the present disclosure, the cell includes multiple electrode core packs arranged in a first direction and connected in series, and the first direction is a length direction of the cell.

In an implementation of the present disclosure, the cell further includes:
a battery controller, configured to collect information of the electrode core pack in the cell.

In an implementation of the present disclosure, the ceramic sealing member defines a through hole, the sampling member is fixed to the ceramic sealing member in the through hole, and the first end and the second end of the sampling member protrude out of the through hole.

In an implementation of the present disclosure, the connection sheet and the ceramic sealing member are welded, and the first end of the sampling member passes through the connection sheet.

In an implementation of the present disclosure, the cover plate defines a first recess and a sampling through hole running through the cover plate at the first recess, the connection sheet is fixed to the cover plate within the first recess, and the first end of the sampling member passes through the sampling through hole.

In an implementation of the present disclosure, the cell further includes:
a connector, connected between the second end of the sampling member and the battery controller to electrically connect the sampling member to the battery controller.

In an implementation of the present disclosure, the connector includes a first connection member and a second connection member, the second end of the sampling member is inserted into the first connection member and protrudes into the second connection member, the second connection member is electrically connected to the battery controller, and the first connection member is connected to the second connection member to electrically connect the sampling member to the battery controller.

In an implementation of the present disclosure, a third connection member is arranged on the second connection member, and the second end of the sampling member is electrically connected to the battery controller by the third connection member.

In an implementation of the present disclosure, the first connection member defines a second recess that is recessed from a surface of the first connection member facing the cover plate to a surface of the first connection member facing away from the cover plate, and the ceramic sealing member is accommodated in the second recess and connected to the first connection member.

In an implementation of the present disclosure, a first fastener is arranged on a wall surface of the second recess and protrudes in a radial direction of the second recess; and
a distance is preset between a surface of the connection sheet facing the ceramic sealing member and a surface of the cover plate facing the ceramic sealing member, the ceramic sealing member includes a first portion overlapped with the connection sheet and a second portion surrounding the first portion, and the second portion and a peripheral side of the connection sheet form a first concave portion recessed in a radial direction of the connection sheet; and the first fastener is fitted with the first concave portion to connect the first connection member to the ceramic sealing member.

In an implementation of the present disclosure, a first fastener is arranged on a wall surface of the second recess and protrudes in a radial direction of the second recess, a second concave portion is arranged at a peripheral side of the connection sheet and is recessed in a radial direction of the connection sheet, and the first fastener is fitted with the second concave portion to connect the first connection member to the connection sheet.

In an implementation of the present disclosure, a second fastener is provided at an outer side of the second connection member, the first connection member defines a third recess that is recessed from a surface of the first connection member facing away from the cover plate to a surface of the first connection member facing the cover plate, a convex portion is arranged on a wall surface of the third recess and protrudes in a radial direction of the first connection member, and the second fastener is fitted with the convex portion; and when the second connection member is inserted into the third recess of the first connection member, the second fastener is fastened to the convex portion.

In an implementation of the present disclosure, the second connection member defines a conductive through hole, the third connection member passes through the conductive through hole, and the second end of the sampling member is inserted into the second connection member and protrudes into the conductive through hole to be electrically connected to the third connection member.

In an implementation of the present disclosure, an encapsulation film is further arranged between the housing and the electrode core pack, and the electrode core pack is encapsulated in the encapsulation film.

In an implementation of the present disclosure, the electrode core pack includes an electrode core pack body, a first electrode and a second electrode that are electrically connected to the electrode core pack body for leading out a current, and in two electrode core packs that are connected in series, a junction of the first electrode of one electrode core pack and the second electrode of the other electrode core pack is in the encapsulation film.

In an implementation of the present disclosure, an encapsulation portion is formed at a position of the encapsulation film corresponding to the first electrode and/or the second electrode to separate two adjacent electrode core pack bodies from each other; and
in the two adjacent electrode core packs, at least one of the first electrode of one electrode core pack and the second electrode of the other electrode core pack is arranged in the encapsulation portion.

In an implementation of the present disclosure, the encapsulation film includes multiple sub-encapsulation films arranged at intervals, an electrode core pack is encapsulated in each of the sub-encapsulation films to form an electrode core assembly, and the electrode core assemblies are connected in series.

According to a second aspect of the present disclosure, a battery module is provided, including multiple cells according to any one of the foregoing.

According to a third aspect of the present disclosure, a battery pack is provided, including multiple cells according to any one of the foregoing or multiple battery modules according to any one of the foregoing.

According to a fourth aspect of the present disclosure, an electric vehicle is provided, including the foregoing battery module or the foregoing battery pack.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the embodiment description made with reference to the following accompanying drawings, where:
FIG. 1 is a schematic structural diagram of a cell according to an embodiment of the present disclosure;
FIG. 2 is a schematic three-dimensional diagram of a cover plate part of a cell according to an embodiment of the present disclosure;
FIG. 3 is a three-dimensional exploded view of a cover plate part of a cell according to an embodiment of the present disclosure;
FIG. 4 is a three-dimensional exploded view of a sampling assembly part on a cover plate of a cell according to an embodiment of the present disclosure;
FIG. 5 is a front view of a cover plate part of a cell according to an embodiment of the present disclosure;
FIG. 6 is a cross-sectional view along B-B in FIG. 5;
FIG. 7 is a cross-sectional view along C-C in FIG. 5;
FIG. 8 is an enlarged view of a part M in FIG. 7;
FIG. 9 is a cross-sectional view of a cover plate part of a cell according to another embodiment of the present disclosure;
FIG. 10 is an enlarged view of a part N in FIG. 9;
FIG. 11 is a cross-sectional view of a cell according to an embodiment of the present disclosure; and
FIG. 12 is a cross-sectional view of a cell according to another embodiment of the present disclosure.

### DETAILED DESCRIPTION

Embodiments of the present disclosure are described in detail below, and examples of the embodiments are shown in the accompanying drawings, where the same or similar elements or the elements having same or similar functions are denoted by the same or similar reference numerals throughout the description. The embodiments described below with reference to the accompanying drawings are exemplary, and are intended to explain the present disclosure and cannot be construed as a limitation to the present disclosure.

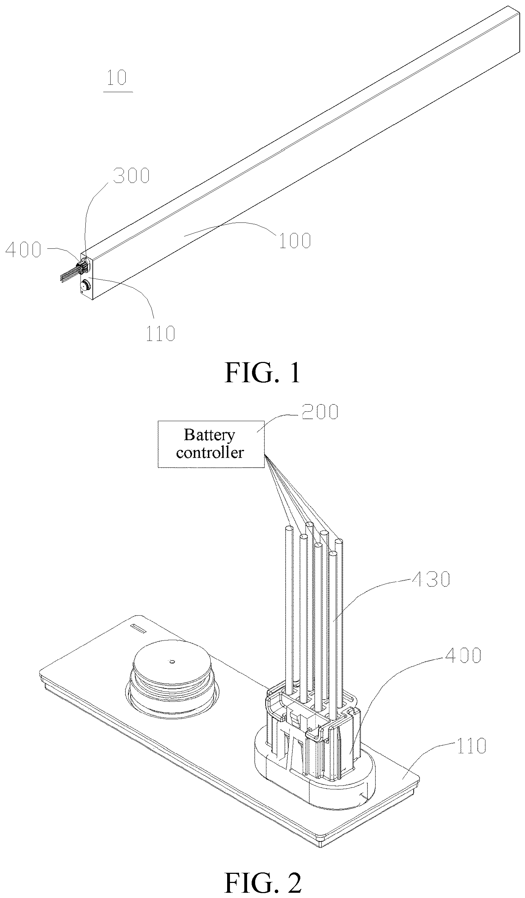

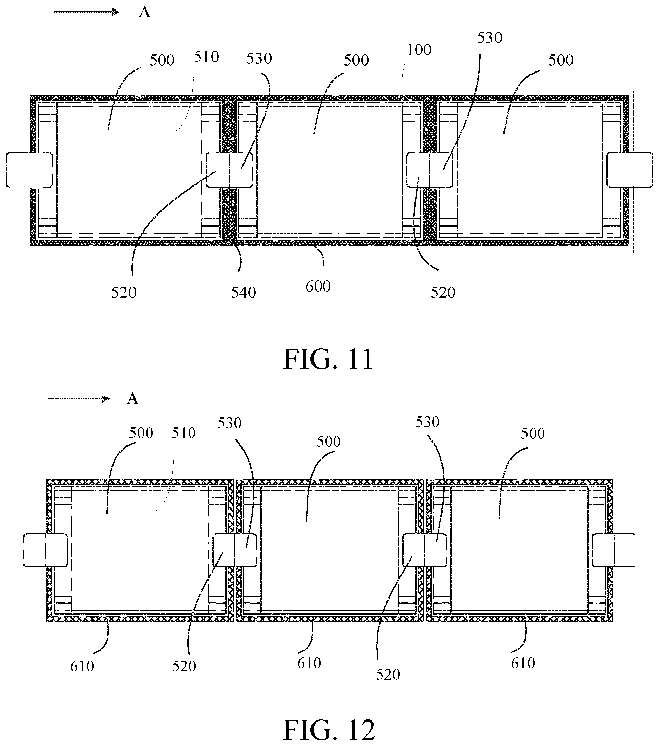

Referring to FIG. 1, an embodiment of the present disclosure provides a cell 10 including a housing 100, an electrode core pack 500, and a sampling assembly 300. The housing 100 includes a cover plate 110 arranged at an end portion of the cell 10. There may be one or two cover plates 110. The sampling assembly 300 may be arranged on one or two cover plates 110. In this embodiment, the housing 100 includes a side housing with openings at both ends and two cover plates 110 at both ends respectively, the two cover plates 110 and the side housing form an enclosed accommodating cavity, the electrode core pack 500 is arranged in the accommodating cavity (as shown in FIG. 11), and the sampling assembly 300 is arranged on one cover plate 110. The electrode core pack 500 is arranged in the housing 100. The electrode core pack 500 includes at least one electrode core.

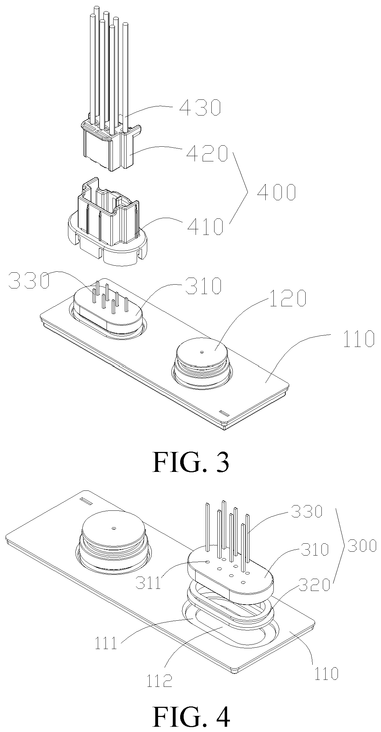

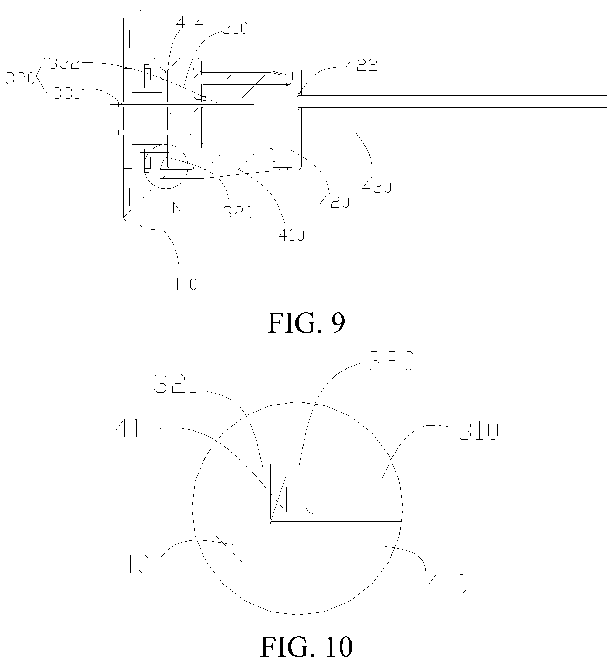

Referring to FIG. 4, the sampling assembly 300 includes a ceramic sealing member 310, a connection sheet 320, and a sampling member 330. The ceramic sealing member 310 is fixed on the cover plate 110 by the connection sheet 320. The sampling member 330 is fixed on the ceramic sealing member 310. A first end 331 (as shown in FIG. 9) of the sampling member 330 is electrically connected to the electrode core pack 500 in the cell 10. A second end 332 of the sampling member 330 is provided to be electrically connected to a battery controller 200. The sampling member 330 collects information of the electrode core pack 500 in the cell 10 through the first end 331 and transmits the information to the battery controller 200 through the second end 332.

In related arts, the sampling member 330 is directly fixed on the cover plate 110, resulting in poor sealing at the junction of the sampling member 330 and the cover plate 110. Compared with the manner of directly fixing the sampling member 330 on the cover plate 110, in the present disclosure, the sampling member 330 is fixed on the cover plate 110 by the ceramic sealing member 310 and the connection sheet 320, which can improve the airtightness of the housing 100. In addition, it is difficult for a conventional integrally injection-molded structure to ensure the airtightness after long-time aging, which can be ensured by applying the ceramic sealing member 310.

Referring to FIG. 3, in this embodiment, the cover plate 110 further includes a negative terminal 120. In other embodiments, the sampling assembly 300 may be mounted on a cover plate having a positive terminal.

Referring to FIG. 2, in a further embodiment, the cell further includes a battery controller 200. The battery controller 200 is configured to collect information of the electrode core pack 500 in the cell 10. The information of the electrode core pack 500 includes current, voltage, and temperature. The battery controller 200 may also be configured to collect information about atmospheric pressure in the accommodating cavity. The battery controller 200 may also be configured to control and manage the cell according to information of the electrode core pack 500 collected by the sampling assembly 300 to protect the cell 10 from damage.

In this embodiment, the battery controller 200 is a battery management system (BMS) unit and may include a printed circuit board assembly (PCBA).

Referring to FIG. 4 again, in a further embodiment, the ceramic sealing member 310 defines a through hole 311, the sampling member 330 is fixed to the ceramic sealing member 310 in the through hole 311, and the first end 331 and the second end 332 of the sampling member 330 protrude out of the through hole 311 (as shown in FIG. 9). In this embodiment, the sampling member 330 is welded in the through hole 311, and specifically, the sampling member 330 is soldered in the through hole 311. The quantity of the through hole 311 corresponds to the quantity of the sampling member 330. In the present disclosure, the through holes 311 are provided at intervals, so that the sampling members 330 are also arranged at intervals, thereby ensuring the insulation between the sampling members 330.

In the present disclosure, the sampling member 330 can be a copper needle with a high temperature resistance of 600-800 degrees. The connection sheet 320 is an aluminum connection sheet. The cover plate 110 and the connection sheet 320 can be made of aluminum.

In a further embodiment, surfaces of the sampling member 330 and the ceramic member 310 in contact with each other are provided with a metal layer, to improve the conductive connection between the sampling member 330 and the ceramic sealing member 310, and reduce the contact resistance. The metal layer can be a gold layer. The thickness of the metal layer can be 0.2 mm.

It should be noted that there is seven sampling members 330 in this embodiment. One sampling member 330 is used as a negative collection terminal, and the other six sampling members 330 are used as positive collection terminals for six electrode core packs 500 respectively. The negative collection terminal and one positive collection terminal collect information of a corresponding electrode core pack 500. Therefore, in this embodiment, six electrode core packs 500 may be sampled at the same time. Certainly, less than six electrode core packs 500 may also be sampled. In other embodiments, there may be 11 sampling members 330, and less than 10 electrode core packs 500 may be sampled. The quantity may be set according to specific needs.

In a further embodiment, the connection sheet 320 and the ceramic sealing member 310 are welded, the first end 331 of the sampling member 330 passes through the connection sheet 320 (as shown in FIG. 9), and the connection sheet 320 is fixed to the cover plate 110. The connection sheet 320 is a ring that is through in the middle. The connection sheet 320 is fixed to the ceramic sealing member 310 by soldering.

In the present disclosure, the sampling member 330 can be soldered on the ceramic sealing member 310, the ceramic sealing member 310 is soldered in the connection sheet 320, and the connection sheet 320 is laser-beam welded on the cover plate 110. Compared with directly welding the sampling member 330 on the cover plate 110, the foregoing method has a higher airtightness and a higher supporting strength, and is firmer in connection, ensuring the structural pull-off strength and sealing requirements the sampling member 330 and the ceramic sealing member 310.

Referring to FIG. 4 again, in a further embodiment, the cover plate 110 defines a first recess 111 and a sampling through hole 112 running through the cover plate 110 at the first recess 111, the connection sheet 320 is fixed to the cover plate within the first recess 111, and the first end 331 of the sampling member 330 passes through the sampling through hole 112. In this embodiment, the recess 111 is recessed from a surface of the cover plate 110 facing the ceramic sealing member 310 to a surface of the cover plate 110 facing the electrode core pack 500. The connection sheet 320 is fixed to the cover plate within the recess 111 by welding.

In a further embodiment, the sampling assembly 300 also includes a sampling line (not shown in the figure). One end of the sampling line is connected to the sampling member 330, and the other end of the sampling line is electrically connected to the electrode core pack 500. The sampling line may be connected to the electrode core pack 500 through a sampling hole in the side housing.

Referring to FIG. 2 again, in a further embodiment, the cell 10 also includes a connector 400. The connector 400 is connected between the second end 332 of the sampling member 330 and the battery controller 200 to electrically connect the sampling member 330 to the battery controller 200. The sampling member 330 is electrically connected to the battery controller 200 by the connector 400 to improve the conductive connection between the sampling member 330 and the battery controller 200.

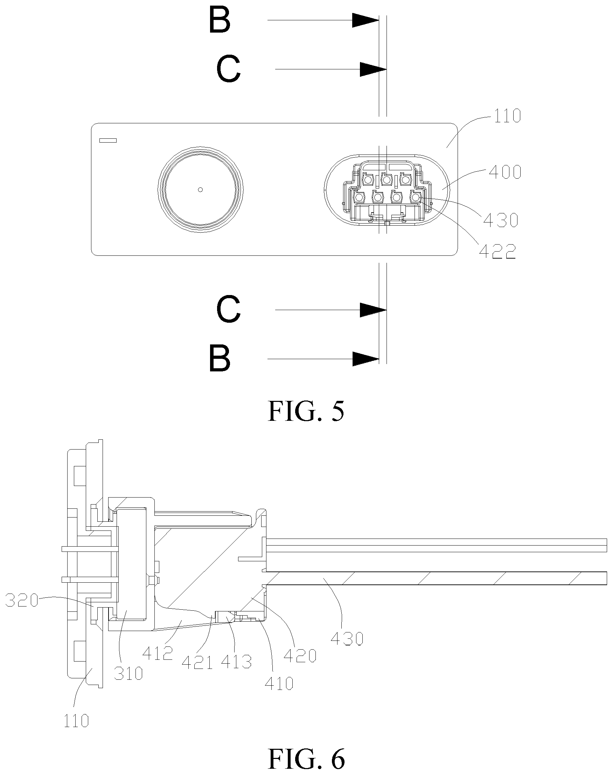

Referring to FIG. 5 to FIG. 9, in a further embodiment, the connector 400 includes a first connection member 410 and a second connection member 420. The second end 332 of the sampling member 330 is inserted into the first connection member 410 and protrudes into the second connection member 420 (as shown in FIG. 9). The second connection member 420 is electrically connected to the battery controller 200. The first connection member 410 is connected to the second connection member 420 to electrically connect the sampling member 330 to the battery controller 200. The first connection member 410 and the second connection member 420 may be fixedly or movably connected. When the first connection member 410 and the second connection member 420 are movably connected, the second connection member 420 connected to the battery controller 200 may be fixed on the first connection member 410 or may be separated from the first connection member 410, so as to achieve the fixing or separation of the battery controller 200 and the components on the cover plate 110, which is more convenient for mounting and removal.

Referring to FIG. 9, in a further embodiment, a third connection member 430 is arranged on the second connection member 420, and the second end 332 of the sampling member 330 is electrically connected to the battery controller 200 by the third connection member 430. The third connection member 330 is a wire. In this embodiment, the first connection member 410 and the second connection member 420 are made of a plastic adhesive, the third connection member 330 is a metal wire, and the third connection member 430 is connected to the second connection member 420 by a thermoplastic process.

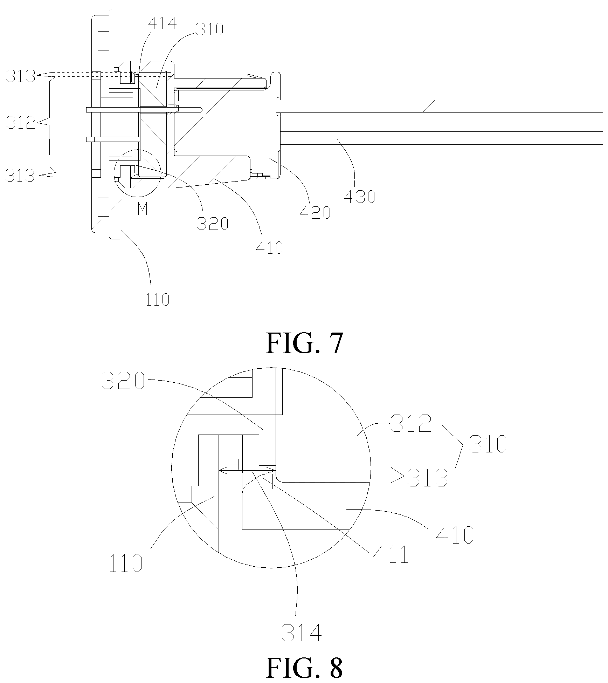

Referring to FIG. 7 and FIG. 8, in a further embodiment, the first connection member 410 defines a second recess 414 that is recessed from a surface of the first connection member 410 facing the cover plate 110 to a surface of the first connection member 410 facing away from the cover plate 110, and the ceramic sealing member 310 is accommodated in the second recess 414 and connected to the first connection member 410. In other words, the first connection member 410 covers the ceramic sealing member 310 in the second recess 414.

In a further embodiment, a first fastener 411 is arranged on a wall surface of the second recess 414 and protrudes in a radial direction of the second recess 414; and a distance H is preset between a surface of the connection sheet 320 facing the ceramic sealing member 310 and a surface of the cover plate 110 facing the ceramic sealing member 310. That is, the connection sheet 320 is not flush with the cover plate 110 and protrudes from the surface of the cover plate 110. The ceramic sealing member 310 includes a first portion 312 overlapped with the connection sheet 320 and a second portion 313 surrounding the first portion 312. The second portion 313 and a peripheral side of the connection sheet 320 form a first concave portion 314 recessed in a radial direction of the connection sheet 320. The first fastener 411 is fitted with the first concave portion 314 to connect the first connection member 410 to the ceramic sealing member 310, so as to connect the first connection member 410 to the cover plate 110.

Referring to FIG. 9 and FIG. 10, in some other embodiments, a first fastener 411 is arranged on a wall surface of the second recess 414 and protrudes in a radial direction of the second recess 414, a second concave portion 321 is arranged at a peripheral side of the connection sheet 320 and is recessed in a radial direction of the connection sheet 320, and the first fastener 411 is fitted with the second concave portion 321 to connect the first connection member 410 to the connection sheet 320. The first connection member 410 is fastened and connected to the connection sheet 320 by the first fastener 411 and the second concave portion 321 to connect the first connection member 410 to the cover plate 110.

Referring to FIG. 6, in a further embodiment, a second fastener 421 is provided at an outer side of the second connection member 420, and the first connection member 410 defines a third recess 412 that is recessed from a surface of the first connection member 410 facing away from the cover plate 110 to a surface of the first connection member 410 facing the cover plate 110. The third recess 412 is recessed from a surface of the first connection member 410 facing away from the cover plate 110 to a surface of the first connection member 410 facing the cover plate 110. A convex portion 413 is arranged on a wall surface of the third recess 412 and protrudes in a radial direction of the first connection member 410. The second fastener 421 is fitted with the convex portion 413. When the second connection member 420 is inserted into the third recess 412 of the first connection member 410, the second fastener 421 is fastened to the convex portion 413. That is, the first connection member 410 is fastened to the second connection member 420 by the second fastener 421 and the convex portion 413.

In this embodiment, the first connection member 410 is fastened to the connection sheet 320 by the first fastener 411 and the first concave portion 314, and the second connection member 420 is fastened to the first connection member 410 by the second fastener 421 and the convex portion 413. In addition, the sampling member 330 can be fixed, the first connection member 410 is also connected to the cover plate 110 by the connection sheet 320, and the second connection member 420 is connected to the battery controller 200, so that it is convenient for connection and disassembly between the cover plate 110 and the battery controller 200.

Referring to FIG. 5 and FIG. 9, in a further embodiment, the second connection member 420 defines a conductive through hole 422, the third connection member 430 passes through the conductive through hole 422, and the second end 332 of the sampling member 330 is inserted into the second connection member 420 and protrudes into the conductive through hole 422 to be electrically connected to the third connection member 430. When the second connection member 420 is fastened to the first connection member 410, the sampling member 330 is electrically connected to the third connection member 430 in the conductive through hole 422 to transmit information of the electrode core pack 500 in the cell to the battery controller 200.

In a further embodiment, the cell includes multiple electrode core packs 500 arranged in a first direction A and connected in series. The first direction A is a length direction of the cell 10. Each electrode core pack 500 includes at least one electrode core. In an embodiment, the cell includes three electrode core packs 500 (as shown in FIG. 11) arranged in the first direction A and connected in series. In other embodiments, the quantity of the electrode core pack 500 may be set according to actual needs.

Referring to FIG. 11, in a further embodiment, an encapsulation film 600 is further arranged between the housing 100 and the electrode core pack 500, and the electrode core pack 500 is encapsulated in the encapsulation film 600. In the present disclosure, each electrode core pack 500 is a soft-wrapped electrode core pack 500, that is, the electrode core pack 500 is wrapped in the encapsulation film 600 in a sealed manner. The encapsulation film 600 can be made of a sealing material such as a PET-PP composite film or an aluminum plastic film. The soft-wrapped electrode core pack 500 will expand after capacity grading and formation. The housing 100 is usually encapsulated in an aluminum shell. The cavity inside the encapsulation film 600 needs to be vacuumized to constrain the soft-wrapped electrode core pack 500. Therefore, there is a requirement on the airtightness of the accommodating cavity of the encapsulation film 600. In the present disclosure, the sampling member 330 is fixed on the cover plate 110 by the ceramic member 310 and the connection sheet 320, so that the airtightness at the junction of the cover plate 100 and the sampling member 330 can be improved.

In this embodiment, the housing 100 is a metal housing. The electrode core pack 500 is first encapsulated in the encapsulation film 600, and the encapsulation film 600 is sleeved with the metal housing 100, thereby achieving secondary packaging of the electrode core pack 500 and improving the sealing performance of the cell 10. It may be understood that an electrolyte solution is further injected into the encapsulation film 600. Therefore, through the foregoing method, the contact between the electrolyte solution and the metal housing 100 can also be avoided, thereby avoiding corrosion of the metal housing 100 or decomposition of the electrolyte solution.

In some implementations, the electrode core pack 500 includes an electrode core pack body 510, a first electrode 520 and a second electrode 530 that are electrically connected to the electrode core pack body 510 for leading out a current. In two electrode core packs 500 connected in series, a junction of the first electrode 520 of one electrode core pack 500 and the second electrode 530 of the other electrode core pack 500 is in the encapsulation film 600.

In other words, the encapsulation film 600 is integrally arranged, and multiple electrode core packs 500 are encapsulated in the same encapsulation film 600. In this embodiment, multiple electrode cores in the same electrode core pack 500 are connected in parallel, and the electrode core packs 500 are connected in series, so that the cell capacity can be increased and the manufacturing cost can be reduced.

It should be noted that a series connection manner in this embodiment may be a series connection between adjacent electrode core packs 500. In a specific implementation, the first electrode 520 and the second electrode 530 on the adjacent electrode core packs 500 may be directly connected or may be electrically connected by an additional conductive component. Generally, each electrode core pack 500 includes the first electrode 520 and the second electrode 530 for leading out a current. If the electrode core pack 500 includes only one electrode core, the first electrode 520 and the second electrode 530 may be respectively a positive electrode tab and a negative electrode tab of the electrode core, or may be respectively a negative electrode tab and a positive electrode tab. If the electrode core pack 500 includes multiple electrode cores, a lead-out component of the first electrode 520 and the second electrode 530 may be an electrode lead. The "first" and "second" of the first electrode 520 and the second electrode 530 are only used for name distinguishing, but are not used for quantity limiting. For example, there may be one or more first electrodes 520.

When the metal housing 100 includes multiple electrode core packs 500, a negative pressure state of the metal housing 100 can effectively avoid the movement of the multiple electrode core packs 500 in the metal housing 100, thereby improving the safety performance of the cell 100.

In the foregoing implementation, an encapsulation portion 540 is formed at a position of the encapsulation film 600 corresponding to the first electrode 520 and/or the second electrode 530 to separate two adjacent electrode core pack bodies 510 from each other; and in two adjacent electrode core packs 500, at least one of the first electrode 520 of one electrode core pack 500 and the second electrode 530 of the other electrode core pack 500 is arranged in the encapsulation portion 540. Multiple electrode core packs 500 are separated from each other through the encapsulation portion 540 to prevent electrolyte solutions in the multiple electrode core packs 500 from circulating through each other, so that the multiple electrode core packs 500 do not affect each other and the electrolyte solutions in the multiple electrode core packs 500 are not decomposed due to an excessively large potential difference, thereby ensuring the safety and the service life of the cell.

The encapsulation portion 540 may be implemented in multiple manners. For example, the encapsulation portion 540 may be formed by fastening the encapsulation film 600 tightly using a tie, or the encapsulation portion 540 may be formed by directly hot melting the encapsulation film 600. The specific implementation of the encapsulation portion 540 is not particularly limited.

In this implementation, multiple electrode core packs 500 may share the same encapsulation film 600. In this case, an encapsulation portion 540 is arranged between adjacent electrode core packs 500. The encapsulation portion 540 may be formed by hot melting the encapsulation film 600 between the electrode core packs 500. Specifically, the electrode core pack 500 includes the first electrode 520 and the second electrode 530. Before the electrode core pack 500 is encapsulated, the multiple electrode core packs 500 are first connected in series, and then the electrode core packs 500 connected in series are wrapped by using an encapsulation film 600. For example, the electrode core packs 500 connected in series may be placed on a part of the encapsulation film 600, then the remaining part of the encapsulation film 600 is folded toward the electrode core packs 500, and subsequently two parts of the encapsulation film 600 are hot melted for sealing. In this way, the electrode core packs 500 connected in series are encapsulated in the same encapsulation film 600, and the encapsulation film 600 at upper and lower parts between the electrode core packs 500 is also hot-melted and squeezed to form one piece, so that a separator is formed between the electrode core packs 500 to separate the electrode core packs 500 from each other.

Referring to FIG. 12, in some other implementations of the present disclosure, the encapsulation film 600 includes multiple sub-encapsulation films 610 arranged at intervals, an electrode core pack 500 is encapsulated in each of the sub-encapsulation films 610 to form an electrode core assembly, and the electrode core assemblies are connected in series.

In other words, the quantity of the sub-encapsulation film 610 is in one-to-one correspondence to the quantity of the electrode core pack 500, and each electrode core pack 500 is individually encapsulated in a sub-encapsulation film 610. In this implementation, after multiple electrode core packs 500 are prepared, each electrode core pack 500 may be individually sleeved with a sub-encapsulation film 610, and then the electrode core assemblies are connected in series.

The sub-encapsulation films 610 of the multiple electrode core packs are independent of each other. That is, each electrode core pack 500 is individually encapsulated in a sub-encapsulation film 610. In this case, the first electrode 520 and the second electrode 530 of the electrode core pack 500 are respectively led out of both ends of the electrode core pack 500 in the first direction A. After the electrode core pack 500 is encapsulated in the sub-encapsulation film 610, the electrode core packs 500 are connected in series by the first electrode 520 and the second electrode 530 that are led out.

In the present disclosure, in order to increase the cell capacity, multiple electrode core packs 500 are connected in series in the housing 100 of the cell 10. In the case of vibration and bumping, the multiple electrode core packs 500 easily move in the housing 100 and thus there is a relative displacement between the electrode core packs 500 or between the electrode cores, thereby causing damage to the electrode cores, such as damage to a current collector, wrinkling of a separator, and detachment of an active-material layer from an electrode plate. In this case, the cell has a poor stability, which is prone to safety issues.

Therefore, in a further embodiment, an atmospheric pressure between the metal housing 100 and the encapsulation film 600 is lower than an atmospheric pressure outside the metal housing 100.

In the present disclosure, the "atmospheric pressure" is the pressure within the atmosphere of Earth. An atmospheric pressure measures force per unit area, which is equal to a weight of a vertical air column extending upward to the upper limit of the atmosphere per unit area.

The atmospheric pressure between the metal housing 100 and the encapsulation film 600, that is, the atmospheric pressure in a space between the metal housing 100 and the encapsulation film 600, is lower than the atmospheric pressure outside the metal housing 100. Therefore, in this embodiment of the present disclosure, there is a negative pressure state between the metal housing 100 and the encapsulation film 600, so that the metal housing 100 is dented or deformed under the atmospheric pressure. As a result, the gap between the metal housing 100 and the electrode core packs 500 is reduced correspondingly, that is, the space in which the electrode core packs 500 move or have a displacement therebetween is reduced, and thus the movement of the electrode core packs 500 and the relative displacement between the electrode core packs 500 can be reduced, thereby improving the stability of the cell 100, as well as the strength of the cell 100 and the safety performance of the cell 100.

For example, air may be exhausted from the space between the metal housing 100 and the encapsulation film 600, so that there is a negative pressure state between the metal housing 100 and the encapsulation film 600. In this way, the metal housing 100 and the internal electrode core packs 500 are as close as possible to reduce the internal gap to prevent the electrode cores from moving in the metal housing and prevent the relative displacement between the electrode cores, reducing the occurrence of cases such as damage to the current collector, wrinkling of the separator, and detachment of the active material, thereby improving the mechanical strength of the entire cell, prolonging the service life of the cell, and improving the safety performance of the cell.

In an implementation, an atmospheric pressure between the metal housing 100 and the encapsulation film 600 is P1, where a value range of P1 may be -100 kPa to -5 kPa. Further, a value range of P1 may be -75 kPa to -20 kPa. Certainly, a person skilled in the art may set a value of P1 according to an actual need.

An atmospheric pressure inside the encapsulation film 600 is P2, where a relationship between P1 and P2 satisfies that: P1 > P2, and a range of P1/P2 is 0.05 to 0.85.

A value of P2 may be -100 kPa to -20 kPa.

P1, P2, and P1/P2 are limited within the foregoing range. In the present disclosure, a secondary sealing mode is adopted for the electrode core packs 500. As described in the foregoing implementation, the electrode core packs 500 of the cell are first encapsulated in the encapsulation film 600, and in order to prevent the encapsulation film 600 from being damaged as a result of bulging outward due to an excessively large internal atmospheric pressure, the atmospheric pressure between the metal housing 100 and the encapsulation film 600 is set to be greater than the atmospheric pressure inside the encapsulation film 600. In addition, it has been verified through a large number of experiments that when P1/P2 falls within the foregoing range, the reliability of the secondary sealing of the cell is better ensured, and an interface between electrode plates of the cell is also ensured, avoiding a gap between the electrode plates, so that lithium ions can be better conducted.

In some implementations, the atmospheric pressure inside the encapsulation film 600 is lower than the atmospheric pressure between the metal housing 100 and the encapsulation film 600.

The present disclosure further provides a battery module, including multiple cells according to any one of the foregoing.

The present disclosure further provides a battery pack, including multiple cells according to any one of the foregoing or multiple battery modules according to any one of the foregoing.

The present disclosure further provides an electric vehicle, including the foregoing battery module or the foregoing battery pack.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "counterclockwise", "axial direction", "radial direction", and "circumferential direction" are based on orientation or position relationships shown in the accompanying drawings, and are used only for ease and brevity of illustration and description of the present disclosure, rather than indicating or implying that the mentioned apparatus or component needs to have a particular orientation or needs to be constructed and operated in a particular orientation. Therefore, such terms should not be construed as limiting of the present disclosure.

In addition, the terms "first" and "second" are used for descriptive purposes only and are not to be construed as indicating or implying relative importance or implicitly indicating the quantity of technical features indicated. Therefore, features defined by "first" and "second" may explicitly or implicitly include one or more such features. In the description of the present disclosure, unless otherwise specifically limited, "a plurality of" means two or more than two.

In the present disclosure, unless otherwise explicitly specified or defined, the terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediary, or an internal communication between two components or a mutual action relationship between two components. A person of ordinary skill in the art may understand the specific meanings of the foregoing terms in the present disclosure according to specific situations.

In the present disclosure, unless otherwise explicitly specified or defined, the first feature being located "above" or "below" the second feature may be the first feature being in a direct contact with the second feature, or the first feature being in an indirect contact with the second feature through an intermediary. Moreover, the first feature "over", "above" and "on" the second feature may be that the first feature is directly above or obliquely above the second feature, or simply indicates that a horizontal height of the first feature is higher than that of the second feature. The first feature "under", "below" and "down" the second feature may be that the first feature is directly below or obliquely below the second feature, or simply indicates that a horizontal height of the first feature is less than that of the second feature.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present disclosure. In this specification, schematic descriptions of the foregoing terms are not necessarily directed at the same embodiment or example. Besides, the specific features, structures, materials or characteristics that are described may be combined in proper manners in any one or more embodiments or examples. In addition, a person skilled in the art may integrate or combine different embodiments or examples described in this specification and features of the different embodiments or examples as long as they are not contradictory to each other.

Although the embodiments of the present disclosure have been shown and described above, it can be understood that, the foregoing embodiments are exemplary and should not be understood as limitation to the present disclosure. A person of ordinary skill in the art may make changes, modifications, replacements, or variations to the foregoing embodiments within the scope of the present disclosure.

## Claims

1. A cell, comprising:
a housing, comprising a cover plate arranged at an end portion of the cell;
an electrode core pack, arranged in the housing and comprising at least one electrode core; and
a sampling assembly, comprising a ceramic sealing member, a connection sheet, and a sampling member, wherein the ceramic sealing member is fixed on the cover plate by the connection sheet, the sampling member is fixed on the ceramic sealing member, a first end of the sampling member is connected to the electrode core pack, and a second end of the sampling member is provided to be electrically connected to a battery controller.

2. The cell according to claim 1, wherein the cell comprises a plurality of electrode core packs arranged in a first direction and connected in series, and the first direction is a length direction of the cell.

3. The cell according to claim 1, further comprising:
a battery controller, configured to collect information of the electrode core pack in the cell.

4. The cell according to claim 1, wherein the ceramic sealing member defines a through hole, the sampling member is fixed to the ceramic sealing member in the through hole, and the first end and the second end of the sampling member protrude out of the through hole.

5. The cell according to claim 1, wherein the connection sheet and the ceramic sealing member are welded, and the first end of the sampling member passes through the connection sheet.

6. The cell according to claim 5, wherein the cover plate defines a first recess and a sampling through hole running through the cover plate at the first recess, the connection sheet is fixed to the cover plate within the first recess, and the first end of the sampling member passes through the sampling through hole.

7. The cell according to claim 3, further comprising:
a connector, connected between the second end of the sampling member and the battery controller to electrically connect the sampling member to the battery controller.

8. The cell according to claim 7, wherein the connector comprises a first connection member and a second connection member, the second end of the sampling member is inserted into the first connection member and protrudes into the second connection member, the second connection member is electrically connected to the battery controller, and the first connection member is connected to the second connection member to electrically connect the sampling member to the battery controller.

9. The cell according to claim 8, wherein a third connection member is arranged on the second connection member, and the second end of the sampling member is electrically connected to the battery controller by the third connection member.

10. The cell according to claim 8, wherein the first connection member defines a second recess that is recessed from a surface of the first connection member facing the cover plate to a surface of the first connection member facing away from the cover plate, and the ceramic sealing member is accommodated in the second recess and connected to the first connection member.

11. The cell according to claim 10, wherein a first fastener is arranged on a wall surface of the second recess and protrudes in a radial direction of the second recess; and
a distance is preset between a surface of the connection sheet facing the ceramic sealing member and a surface of the cover plate facing the ceramic sealing member, the ceramic sealing member comprises a first portion overlapped with the connection sheet and a second portion surrounding the first portion, and the second portion and a peripheral side of the connection sheet form a first concave portion recessed in a radial direction of the connection sheet; and the first fastener is fitted with the first concave portion to connect the first connection member to the ceramic sealing member.

12. The cell according to claim 10, wherein a first fastener is arranged on a wall surface of the second recess and protrudes in a radial direction of the second recess, a second concave portion is arranged at a peripheral side of the connection sheet and is recessed in a radial direction of the connection sheet, and the first fastener is fitted with the second concave portion to connect the first connection member to the connection sheet.

13. The cell according to claim 8, wherein a second fastener is provided at an outer side of the second connection member, the first connection member defines a third recess that is recessed from a surface of the first connection member facing away from the cover plate to a surface of the first connection member facing the cover plate, a convex portion is arranged on a wall surface of the third recess and protrudes in a radial direction of the first connection member, and the second fastener is fitted with the convex portion; and when the second connection member is inserted into the third recess of the first connection member, the second fastener is fastened to the convex portion.

14. The cell according to claim 9, wherein the second connection member defines a conductive through hole, the third connection member passes through the conductive through hole, and the second end of the sampling member is inserted into the second connection member and protrudes into the conductive through hole to be electrically connected to the third connection member.

15. The cell according to claim 1, wherein an encapsulation film is further arranged between the housing and the electrode core pack, and the electrode core pack is encapsulated in the encapsulation film.

16. The cell according to claim 14, wherein the electrode core pack comprises an electrode core pack body, a first electrode and a second electrode that are electrically connected to the electrode core pack body for leading out a current, and in two electrode core packs that are connected in series, a junction of the first electrode of one electrode core pack and the second electrode of the other electrode core pack is in the encapsulation film.

17. The cell according to claim 16, wherein an encapsulation portion is formed at a position of the encapsulation film corresponding to the first electrode and/or the second electrode to separate two adjacent electrode core pack bodies from each other; and
in the two adjacent electrode core packs, at least one of the first electrode of one electrode core pack and the second electrode of the other electrode core pack is arranged in the encapsulation portion.

18. The cell according to claim 15, wherein the encapsulation film comprises a plurality of sub-encapsulation films arranged at intervals, an electrode core pack is encapsulated in each of the sub-encapsulation films to form an electrode core assembly, and the electrode core assemblies are connected in series.

19. A battery module, comprising a plurality of cells according to any one of claims 1 to 18.

20. A battery pack, comprising a plurality of cells according to any one of claims 1 to 18 or a plurality of battery modules according to claim 19.

21. An electric vehicle, comprising the battery module according to claim 19 or the battery pack according to claim 20.
